# EUROPEAN PATENT APPLICATION

(11) **EP 4 343 465 A1**
(43) Date of publication of application: **27.03.2024**
(21) Application number: 23198236.4
(22) Date of filing: 19.09.2023
(51) Int. Cl.: G05B 19/042, G06F 3/01

(54) **CLOUD BASED ANALYTICS FOR OPERATOR SITUATION AWARENESS**

(30) Priority: 22.09.2022 US 202217950873
(71) Applicant: Rockwell Automation Technologies, Inc., Mayfield Heights, OH 44124 (US)
(72) Inventor: Board, David V., Mayfield Heights, OH, 44124 (US); George, Philip D., Mayfield Heights, OH, 44124 (US)
(74) Representative: Grünecker Patent- und Rechtsanwälte PartG mbB

(57) **Abstract**

Systems and methods for providing situation aware display generation. One system includes an electronic processor configured to receive, from at least one sensor, monitoring data associated with an industrial system. The electronic processor is also configured to determine, based on the monitoring data, a cognitive workload for an operator of the industrial system. The electronic processor is also configured to determine, based on the cognitive workload, a user interface configuration for the operator of the industrial system. The electronic processor is also configured to transmit the user interface configuration to the industrial system for display to the operator via a display device of the industrial system.

## Description

### CROSS-REFERENCES TO RELATED APPLICATIONS

Not applicable.

### BACKGROUND INFORMATION

Edge and cloud analytics for industrial systems may enable condition monitoring, increased performance, production quality improvements, and the like. However, conventional systems do not provide analytics that focuses purely on making an operator more performant by analyzing and increasing their situation awareness of the industrial system that the operator is operating.

Original equipment manufacturers ("OEMs") generally do not understand the goals or tasks of an end user operator. For example, the displays provided by OEMs are designed by engineers who have a different mental model of and lack an understanding of the end use case for the industrial system. In other words, the designers of these displays have a different perspective than the operators who will ultimately be using these displays. This results in displays that do not increase or maintain the operator's situation awareness. In particular, the lack of workload analysis expertise when designing displays results in poor operator and machine performance and functional safety at the end user's site due to low situation awareness of the operators caused by the as-built displays.

### SUMMARY

The following presents a simplified summary of the disclosed technology herein in order to provide a basic understanding of some aspects of the disclosed technology. This summary is not an extensive overview of the disclosed technology. It is intended neither to identify key or critical elements of the disclosed technology nor to delineate the scope of the disclosed technology. Its sole purpose is to present some concepts of the disclosed technology in a simplified form as a prelude to the more detailed description that is presented later.

The technology disclosed herein relates generally to industrial systems, and, more particularly, to providing situation aware display generation.

Operators should be aware of the current and future status of the operations and tasks. While performing a task, it is easy to lose this awareness. The layout of a display should be designed to help users quickly recognize the status of operations, status of the task, and where the operations and task is heading. Using alarm state icons is helpful for situational awareness. Placing these icons on items that are in an alarm state and providing a list of the highest priority alarms occurring helps users quickly assess the current situation. Using specific colors to indicate alarms (and not using those colors elsewhere) allows the alarms to stand out against the rest of the information on the screen. Trends can also give an indication of what the process has been doing and where it may be heading. As one non-limiting example, a temperature may be in the normal range, but if the temperature has been steadily rising over a period of time, the temperature may eventually rise beyond the high limit. A trend display can quickly show this increase over time while a bar graph or numeric display cannot.

Accordingly, configurations described herein provide systems and methods for providing situation aware display generation. Some configurations described herein implement cloud-based analytics to automatically improve edge human-machine interface displays for increasing and maintaining situation awareness (e.g., during operation of the industrial system at the end user's facility). In some configurations, the systems and methods provide for an artificial intelligence ("AI") based service software for generating displays to increase an operator's situation awareness by analyzing cognitive loading and stressors, such as, e.g., in real-time (or near real-time).

In some configurations, inputs from the following are collected at the industrial system (at the "edge") and sent to the cloud for analysis (e.g., via a cloud server, a cloud platform, or the like). The inputs collected at the industrial system may include, e.g., eye tracking data, web camera data, bio radar detection data, task analysis data, cognitive workload data (e.g., NASA task load index ("TLX")), button click responses to abnormal conditions data (e.g., alarms), and the like. In some configurations, one or more of these inputs are fed into an AI model or a machine learning model that then references an end user's human-machine interface style guide and a human-machine interface toolkit (e.g., one or more object libraries) to generate a display. In some configurations, the generated displays are compliant with a predetermined industry standard, such as, e.g., ISA101 (IEC 63303). In some configurations, the generated displays will improve over time into displays that increase the operator's situation awareness and, ultimately, increase the operator's effectiveness at running the machine.

Accordingly, configuration described herein provide systems and methods for providing situation aware display generation. One configuration provides a system for providing situation aware display generation. The system includes an electronic processor configured to receive, from at least one sensor, monitoring data associated with an industrial system. The electronic processor is also configured to determine, based on the monitoring data, a cognitive workload for an operator of the industrial system. The electronic processor is also configured to determine, based on the cognitive workload, a user interface configuration for the operator of the industrial system. The electronic processor is also configured to transmit the user interface configuration to the industrial system for display to the operator via a display device of the industrial system.

Another configuration provides a method for providing situation aware display generation. The method includes receiving, with an electronic processor, from at least one sensor, monitoring data associated with an industrial system. The method also includes determining, based on the monitoring data, with the electronic processor, a cognitive workload for an operator of the industrial system. The method also includes determining, with the electronic processor, a user interface configuration for the operator based on the cognitive workload and a predetermined industry standard. The method also includes transmitting, with the electronic processor, the user interface configuration to the industrial system for display to the operator via a display device of the industrial system.

Yet another configuration provides a non-transitory computer-readable medium storing instructions that, when executed by an electronic processor, perform a set of functions. The set of functions include receiving, from at least one sensor, monitoring data associated with an industrial system. The set of functions also includes determining, based on the monitoring data, a cognitive workload for an operator of the industrial system. The set of functions also includes determining, based on the cognitive workload, a custom user interface configuration for the operator of the industrial system, wherein the custom user interface configuration complies with a predetermined industry standard. The set of functions also includes generating a graphical user interface based on the custom user interface configuration. The set of functions also includes providing the graphical user interface to the industrial system for display to the operator via a display device of the industrial system.

The foregoing and other aspects and advantages of the present disclosure will appear from the following description. In the description, reference is made to the accompanying drawings which form a part hereof, and in which there is shown by way of illustrations one or more embodiments of the present disclosure. Such configurations do not necessarily represent the full scope of the present disclosure, however, and reference is made therefore to the claims and herein for interpreting the scope of the present disclosure.

### BRIEF DESCRIPTION OF DRAWINGS

The present disclosure will be better understood and features, aspects and advantages other than those set forth above will become apparent when consideration is given to the following detailed description thereof. Such detailed description makes reference to the following drawings.
FIG. 1 schematically illustrates a system for providing situation aware display generation in accordance with some configurations.
FIG. 2 illustrates an example industrial subsystem of the system of FIG. 1 according to some configurations.
FIG. 3 illustrates an example server of the system of FIG. 1 according to some configurations.
FIG. 4 is a flowchart illustrating a method for providing situation aware display generation using the system of FIG. 1 in accordance with some configurations.
FIG. 5 illustrates an example edge human-machine interface display in accordance with some configurations.
FIG. 6 illustrates an example edge human-machine interface display in accordance with some configurations.

### DETAILED DESCRIPTION

As utilized herein, terms "component," "system," "controller," "device," "manager," and variants thereof are intended to refer to a computer-related entity, either hardware, a combination of hardware and software, software, or software in execution. For example, a component may be, but is not limited to being, a process running on a processor, a processor, an object, an executable, a thread of execution, a program, and/or a computer. By way of illustration, both an application running on a server and the server may be a component. One or more components may reside within a process and/or thread of execution and a component may be localized on one computer and/or distributed between two or more computers.

The disclosed technology is described with reference to the drawings, wherein like reference numerals are used to refer to like elements throughout. In the following description, for purposes of explanation, numerous specific details are set forth in order to provide a thorough understanding of the disclosed technology. It may be evident, however, that the disclosed technology may be practiced without these specific details. In other instances, well-known structures and devices are shown in block diagram form in order to facilitate describing the disclosed technology.

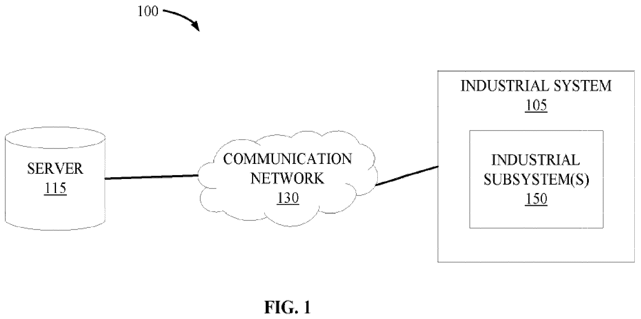

FIG. 1 schematically illustrates a system 100 for providing situation aware display generation according to some configurations. In the illustrated example, the system 100 may include an industrial system 105 and a server 115. In some configurations, the system 100 includes fewer, additional, or different components in different configurations than illustrated in FIG. 1. As one non-limiting example, the system 100 may include multiple industrial systems 105, multiple servers 115, or a combination thereof. As another non-limiting example, one or more components of the system 100 may be combined into a single device. Alternatively, or in addition, in some configurations, the server 115 may be included as part of the industrial system 105 (e.g., as a component of the industrial system 105).

The industrial system 105 and the server 115 may communicate over one or more wired or wireless communication networks 130. Portions of the communication networks 130 may be implemented using a wide area network, such as the Internet, a local area network, such as a BLUETOOTH^{®} or WI-FI^{®}, and combinations or derivatives thereof. Alternatively, or in addition, in some configurations, components of the system 100 may communicate directly as compared to through the communication network 130. Also, in some configurations, the components of the system 100 may communicate through one or more intermediary devices not illustrated in FIG. 1.

The industrial system 105 may be a manufacturing system, such as, e.g., an industrial automation system or the like. The industrial system 105 may perform one or more industrial processes, manufacturing processes, production processes, or the like. In some embodiments, the industrial system 105 may perform a production method that produces goods or products. As one non-limiting example, the industrial system 105 may perform a vehicle manufacturing process to assemble or produce a vehicle (or various components thereof). As another non-limiting example, the industrial system 105 may perform a food manufacturing process for making a food product.

As illustrated in FIG. 1, in some configurations, the industrial system 105 may include at least one industrial subsystem 150 (referred to herein collectively as "the industrial subsystems 150" and individually as "the industrial subsystem 150"). Although FIG. 1 illustrates a single industrial subsystem 150, in some configurations, the industrial system 105 may include more than one industrial subsystems 150 (e.g., a second industrial subsystem, a third industrial subsystem, a fourth industrial subsystem, and an Nth industrial subsystem). The industrial subsystem 150 may represent a section of the industrial system 105, such as, e.g., a workstation, a piece of equipment or machinery, a segment of the industrial system 105, or another component of the industrial system 105. The industrial subsystem 150 may perform (or be associated with) one or more sub-processes of the industrial system 105. As one non-limiting example, when the industrial system 105 performs a vehicle manufacturing process, the industrial subsystem 150 may perform an installation process for windshields.

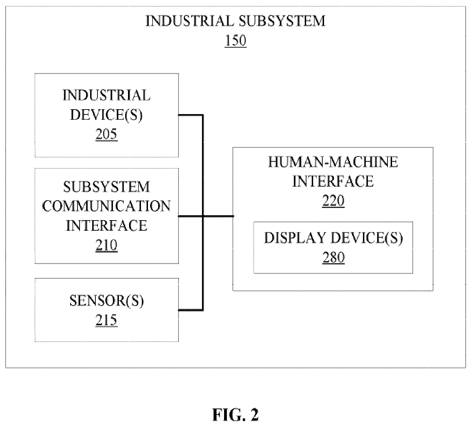

FIG. 2 schematically illustrates the industrial subsystem 150 according to some configurations. In the illustrated example, the industrial subsystem 150 includes one or more industrial devices 205 (referred to herein collectively as "the industrial devices 205" and individually as "the industrial device 205"), a subsystem communication interface 210, one or more sensors 215 (referred to herein collectively as "the sensors 215" and individually as "the sensor 215"), and a human-machine interface ("HMI") 220. In some configurations, the industrial subsystem 150 includes fewer, additional, or different components in different configurations than illustrated in FIG. 2. As one non-limiting example, the industrial subsystem 150 may include multiple industrial devices 205, multiple subsystem communication interfaces 210, multiple sensors 215, multiple HMIs 220, or a combination thereof. As another non-limiting example, one or more components of the industrial subsystem 150 may be combined into a single device. As yet another non-limiting example, in some configurations, the industrial subsystem 150 may include an edge device for collecting and processing data associated with the industrial subsystem 150.

The industrial device 205 may be a physical piece of equipment included in the industrial subsystem 150. For example, the industrial device 205 may include a pump, a press, a conveyor, an actuator, a valve, an industrial controller (e.g., a programmable logic controller ("PLC") and the like), a switch, a sensor, a server, a database, an additional HMI, another piece of equipment that may be used in connection with an associated industrial process (or subprocess) or application of the industrial system 105, or the like.

The sensor 215 may collect data (as monitoring data) associated with the industrial subsystem 150, including, e.g., data associated with a user of the industrial subsystem 150 (e.g., an operator of the industrial subsystem 150). The monitoring data may include data describing an operation of the industrial system 105 (or an industrial subsystem 150 thereof), a situation awareness associated with an operator of the industrial system 105 (or an industrial subsystem 150 thereof), or the like.

Accordingly, in some configurations, the monitoring data may include operational data associated with the industrial system 105 (or an industrial subsystem 150 thereof). Operational data may include, e.g., a process state (e.g., in a preparation state, in progress, completed, etc.), an operational parameter for one or more industrial devices 205 (or another component thereof) of the industrial system 105 (e.g., a pressure parameter, a speed parameter, a time parameter, etc.), or the like.

Alternatively, or in addition, the monitoring data may include situation awareness data for an operator of the industrial system 105 (or an industrial subsystem 150 thereof). The situation awareness data may include physiological data or measurements associated with an operator. Physiological data may include facial data or measurements (e.g., facial muscle activity (e.g., a Facial Electromyography ("fEMG")), facial expression coding or tracking, etc.), audible data or measurements (e.g., vocal pitch, audible noise (e.g., a grunt, a groan, etc.), audible speech (e.g., a word, a phrase, etc.), etc.), optical data or measurements (e.g., pupil dilation, eye movement (e.g., eye tracking), pupil size, blink rate, clink duration, etc.), or the like. Alternatively or in addition, in some configurations physiological data may include data associated with a cardiac measurement (e.g., heartbeat data, electroencephalography ("EEG") data, heart rate value ("HRV") data, electrocardiogram ("ECG"), a blood pressure, etc.), a respiratory measurement (e.g., respiratory rate, etc.), a neurological measurement (e.g., brain function data, EEG data, etc.), a musculoskeletal measurement (e.g., a muscle strength, a gait, a range of motion, etc.), a temperature measurement (e.g., a body temperature), a perspiration measurement (e.g., electrodermal activity ("EDA") or galvanic skin response ("GSR"), palmar perspiration, etc.), and the like. Alternatively, or in addition, the situation awareness data may include image data associated with the operator, such as, e.g., an image data stream, a video, a still image, and the like.

Accordingly, in some configurations, the sensor 215 may be a pressure sensor, an image sensor, a motion sensor, a speed sensor, a time sensor, a microphone, a set of electrodes or leads (e.g., an EEG machine, an ECG machine, etc.), a bio-radar detection device, a blood oxygen meter (e.g., a pulse oximeter), a light source, a photodetector, another type of sensor suitable to detect or collect the monitoring data as described herein. In some configurations, the sensor 215 is a pre-existing component (e.g., the industrial device 205) of the industrial system 105 (or industrial subsystem 150 thereof), is incorporated into a pre-existing component, or the like). As one non-limiting example, the monitoring data may include a pressure value, such as, e.g., a pressure applied to an input mechanism of the industrial subsystem 150. Following this non-limiting example, the input mechanism may function as a pressure sensor in addition to its function of receiving a user input or interaction. Alternatively, or in addition, the sensor 215 may be an additional component of the industrial system 105 (as illustrated in the example of FIG. 2).

The subsystem communication interface 210 may include a transceiver that communicates with another industrial subsystem (e.g., included in the industrial system 105, included another industrial system, or a combination thereof), the server 115, or a combination thereof over the communication network 130 and, optionally, one or more other communication networks or connections. In some configurations, the subsystem communication interface 210 enables the industrial subsystem 150 (or the industrial system 105) to communicate with the server 115, another remote device (e.g., a remote computing device, server, data, or the like), or a combination thereof over one or more wired or wireless connections. As one non-limiting example, the subsystem communication interface 210 may enable the transmission of data associated with the industrial subsystem 150 (e.g., data collected by the sensor(s) 215, data associated with the operation of the industrial device(s), data received via the HMI 220, or the like). Alternatively, or in addition, the subsystem communication interface 210 may enable the receipt of data from a remote device, such as, e.g., the server 115 (e.g., a user interface configuration or parameters).

As noted above, the industrial subsystem 150 may also include the HMI 220 for interacting with a user (e.g., one or more operators of the industrial subsystem 150). The HMI 220 may include one or more input devices, one or more output devices, or a combination thereof. Accordingly, in some configurations, the HMI 220 allows a user to interact with (e.g., provide input to and receive output from) the industrial subsystem 150 (or the industrial system 105). For example, the HMI 220 may include a keyboard, a cursor-control device (e.g., a mouse), a touch screen, a scroll ball, a mechanical button, a display device (e.g., a liquid crystal display ("LCD")), a printer, a speaker, a microphone, a joystick, a lever, a foot pedal, another type of input device, another type of output device, or a combination thereof. As illustrated in FIG. 2, in some configurations, the HMI 220 includes a display device 280. The display device 280 may be included in a control panel (or other enclosure) of the industrial subsystem 150 or may communicate with the industrial subsystem 150 over one or more wired or wireless connections. As one non-limiting example, in some configurations, the display device 280 is a touchscreen included in a laptop computer or a tablet computer. In other configurations, the display device 280 is a monitor, a television, or a projector coupled to a terminal, desktop computer, or the like via one or more cables.

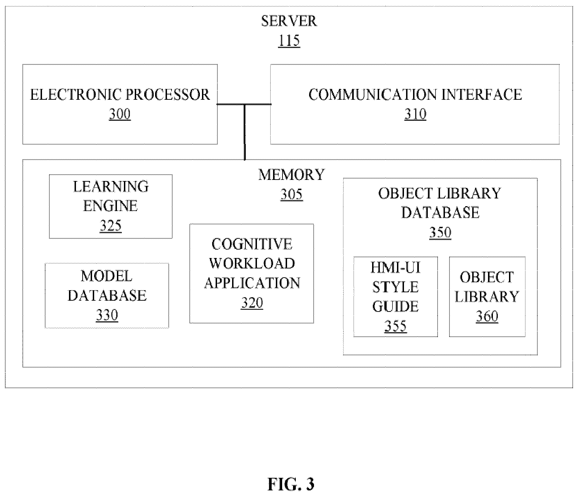

As illustrated in FIG. 3, the server 115 may include an electronic processor 300, a memory 305, and a communication interface 310. The electronic processor 300, the memory 305, and the communication interface 310 may communicate wirelessly, over one or more communication lines or buses, or a combination thereof. The server 115 may include additional components than those illustrated in FIG. 3 in various configurations. The server 115 may also perform additional functionality other than the functionality described herein. Also, the functionality (or a portion thereof) described herein as being performed by the server 115 may be distributed among multiple devices (e.g., as part of a cloud service or cloud-computing environment), combined with another component of the system 100 (e.g., combined with the server 115, another component of the system 100, or the like), or a combination thereof. As one non-limiting example, the server 115 may be a cloud server (e.g., part of a cloud computing environment or network).

The communication interface 310 may include a transceiver that communicates with the industrial system 105, one or more industrial subsystems 150, or a combination thereof over the communication network 130 and, optionally, one or more other communication networks or connections. In some configurations, the communication interface 310 enables the server 115 to communicate with the industrial system 105, one or more industrial subsystems 150, or a combination thereof over one or more wired or wireless connections. The electronic processor 300 may include a microprocessor, an application-specific integrated circuit ("ASIC"), or another suitable electronic device for processing data, and the memory 305 includes a non-transitory, computer-readable storage medium. The electronic processor 300 is configured to retrieve instructions and data from the memory 305 and execute the instructions.

As one non-limiting example, as illustrated in FIG. 3, the memory 305 may include a cognitive workload application 320 (referred to herein as "the application 320"). The application 320 may be a software application executable by the electronic processor 300 in the example illustrated and as specifically discussed below, although a similarly purposed module may be implemented in other ways in other examples. The electronic processor 300 may execute the application 320 to determine a situational awareness of an operator of the industrial system 105 (e.g., an operator of the industrial subsystem 150). Alternatively, or in addition, the electronic processor 300 may execute the application 320 to generate one or more user interfaces for an operator of the industrial system 105 (e.g., an operator of the industrial subsystem 150).

As illustrated in FIG. 3, the memory 305 may also store a learning engine 325 and a model database 330. In some configurations, the learning engine 325 develops a model using one or more machine learning functions. Machine learning functions are generally functions that allow a computer application to learn without being explicitly programmed. In particular, a computer application performing machine learning functions (sometimes referred to as a learning engine) is configured to develop an algorithm based on training data. As one non-limiting example, to perform supervised learning, the training data includes example inputs and corresponding desired (e.g., actual) outputs, and the learning engine progressively develops a model that maps inputs to the outputs included in the training data. Machine learning may be performed using various types of methods and mechanisms including, but not limited to, decision tree learning, association rule learning, artificial neural networks, inductive logic programming, support vector machines, clustering, Bayesian networks, reinforcement learning, representation learning, similarity and metric learning, sparse dictionary learning, and the like. Using one or more of these approaches, a computer program may ingest, parse, and understand data and progressively refine models for data analytics, including cognitive workload analytics.

Models generated by the learning engine 325 may be stored in the model database 330. As illustrated in FIG. 3, the model database 330 may be included in the memory 305 of the server 115. In some configurations, the model database 330 may be included in a separate device accessible by the server 115 (included in the server 115 or external to the server 115).

The memory 305 may also include an object library database 350. In some configurations, the object library database 350 may be located remotely from the server 115, such as, e.g., in a remote database, server, or computing device. In the illustrated example, the object library database 350 may include an HMI style guide 355, an object library 360, or a combination thereof. The HMI style guide 355 may include a set of display parameters. The HMI style guide 355 may provide guidelines or rules for UI design and implementation. For instance, the HMI style guide 355 may define what information to display to a user during operation of the industrial system 105 (or the industrial subsystem 150 thereof), how to physically locate each piece of information, and the like. In some configurations, the HMI style guide 355 aligns with an industry standard. As one non-limiting example, in some configurations, the HMI style guide 355 includes a set of display parameters that follow principles for designing HMIs based on the industry standard ANSI/ISA-101.01-2015 (Human Machine Interfaces for Process Automation).

The set of display parameters may be associated with or include a layout parameter, a header parameter or component (e.g., a display navigation map, a system status, a return to home screen button, a client login/logout button, an alarm banner, an event banner, an alarm access, an alarm silence, and the like), a button bar parameter or component, an alarm summary, a physical layout and alignment, an animation parameter, a visibility parameter (e.g., an unavailable command is displayed as greyed-out), a line depiction parameter (e.g., how different process lines are displayed, such as, thickness, solid, dashed, without an arrow, with an arrow, color, etc.), a grouping box parameter (e.g., what commands should be grouped together, what information should be group together, etc.), a process equipment depiction parameter (e.g., how status information is displayed, etc.), a dynamic process object parameter (e.g., how dynamic process objects are displayed, including, e.g., a state of the process object), a font parameter (e.g., size, type, color, etc.), a data alignment (e.g., defining how numeric data is related to other components, how the numeric data is justified on the UI, etc.), a static text parameter (e.g., how text that does not change during operation is displayed), a label parameter, and the like.

The object library 360 may include a set of objects (e.g., software objects), such as, e.g., a device object, a process object, a concept object, or the like. Each object may represent an industrial asset of the industrial system 105 (or an industrial subsystem 150 therein). A device object may include, e.g., a motor, a blower, a conveyor, an inline motor, a pump, an agitator, a mixer, a rotary gear pump, a fan, a valve, and the like. A process object may include, e.g., a control process implemented with one or more of the device objects. As one non-limiting example, when the object library 360 includes a storage tank object, there is a single object instance that may be applied or implemented with respect to multiple storage tanks. In some configurations, an object may represent a component (physical or conceptual) or device with internal intelligence (e.g., such that the component or device may operate, at least to some extent, interactively and autonomously), such as a smart component or device. In some configurations, the object library 360 may include a platform-specific graphics system and HMI elements that may be used to implement the HMI style guide 355.

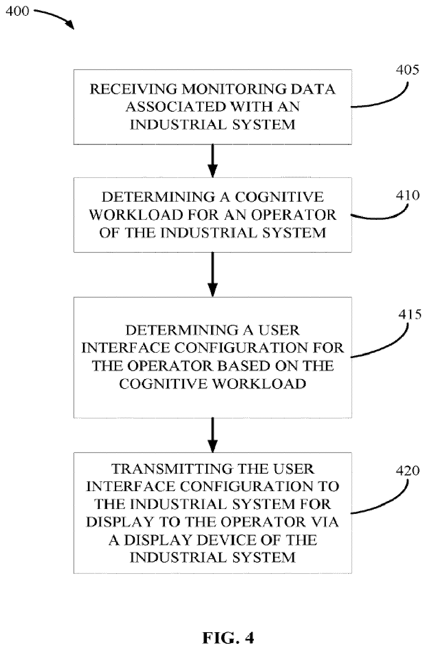

FIG. 4 is a flowchart illustrating a method 400 of providing situation aware display generation according to some configurations. The method 400 is described as being performed by the server 115 and, in particular, the application 320 as executed by the electronic processor 300. However, as noted herein, the functionality described with respect to the method 400 may be performed by other devices, such as a component included in the industrial system 105 (or one or more industrial subsystems 150 therein), distributed among a plurality of devices, such as a plurality of servers included in a cloud service, or a combination thereof.

As illustrated in FIG. 4, the method 400 may include receiving, with the electronic processor 300, monitoring data associated with the industrial system 105 (at block 405). The electronic processor 300 may receive the monitoring data from the industrial system 105 through the communication network 130. As one non-limiting example, in some configurations, the electronic processor 300 receives the monitoring data from the sensor(s) 215 of the industrial system 105 (through the communication network 130).

In some configurations, the electronic processor 300 may receive the monitoring data during operation of the industrial system 105 (e.g., during operation of the industrial system 105 by an operator). The electronic processor 300 may receive the monitoring data as a continuous data stream (e.g., real-time data) during operation of the industrial system 105 (or an industrial subsystem 150 thereof). The electronic processor 300 may receive the monitoring data as an intermittent data stream (e.g., at predetermined time intervals, such as, e.g., every 60 seconds) during operation of the industrial system 105 (or an industrial subsystem 150 thereof).

The monitoring data may include data describing an operation of the industrial system 105 (or an industrial subsystem 150 thereof), a situation awareness associated with an operator of the industrial system 105 (or an industrial subsystem 150 thereof), or the like. In some configurations, the monitoring data may include operational data associated with the industrial system 105 (or an industrial subsystem 150 thereof). Operational data may include, e.g., a process state (e.g., in a preparation state, in progress, completed, etc.), an operational parameter for one or more industrial devices 205 (or another component thereof) of the industrial system 105 (e.g., a pressure parameter, a speed parameter, a time parameter, etc.), or the like. Alternatively, or in addition, the monitoring data may include situation awareness data for an operator of the industrial system 105 (or an industrial subsystem 150 thereof). Situation awareness data may include, e.g., facial data or measurements, audible data or measurements, optical data or measurements, a cardiac measurement, a respiratory measurement, a neurological measurement, a musculoskeletal measurement, a temperature measurement, a perspiration measurement, image data, or the like.

In some configurations, the monitoring data includes operator response data associated with an abnormal operating condition of the industrial system 105. The operator response data may describe how an operator responds to an abnormal operating condition of the industrial system 105. The operator response data may indicate one or more input mechanisms that the operator interacted with, an interaction sequence or order of the one or more input mechanisms, a focus region (e.g., a region or area of the display in which the operator focused on during the abnormal operating condition), or the like. Alternatively, or in addition, in some configurations, the operator response data may include physiological data, image data, operational data, or the like collected during the abnormal operating condition, as an indication of how the operator responded to the abnormal operating condition.

Alternatively, or in addition, in some configurations, the monitoring data includes data related to a task analysis for the operator of the industrial system 105 (referred to herein as "task analysis data"). A task analysis generally describes how a task or objective is accomplished (e.g., how an industrial system, subsystem, or device is operated). The task analysis data may include, e.g., a description of a task or action taken by the operator, a task or element duration, a task frequency, a task allocation, a task complexity, an environmental condition associated with a task, and the like. In some configurations, the task analysis may be performed by a cloud-server (suc as, e.g., the server 115).

In some configurations, the task analysis data is associated with the operator currently operating the industrial system 105. Alternatively, or in addition, the task analysis data is associated with another operator of the industrial system 105. Accordingly, in some embodiments, the task analysis data includes two data sets, where each data set is associated with a different operator. In such embodiments, the task analysis data may be used to perform a comparison between two operators to, e.g., determine which operator performs a task or process more efficiently, optimally, or the like. Alternatively, or in addition, the task analysis data is associated with an optimal performance for a task or process of the industrial system 105. In such embodiments, the task analysis data may be used to perform a comparison of the operator's performance compared to the optimal performance.

The electronic processor 300 may determine a cognitive workload for an operator of the industrial system 105 (at block 410). A cognitive workload generally refers to a user's (or operator's) perceived level of mental effort or stress. An operator's perceived level of mental effort or stress may be influenced by one or more factors, such as, e.g., task load, task design, etc. As one non-limiting example, the cognitive workload of the operator of the industrial system 105 may represent a stress or effort experienced by the operator during operation of the industrial system 105.

The electronic processor 300 may determine the cognitive workload based on the monitoring data. As one one-limiting example, the electronic processor 300 may determine the cognitive workload based on eye tracking data (e.g., via an eye tracking software API), such as, eye tracking data indicative of cognitive load measurements.

In some configurations, the electronic processor 300 may determine the cognitive workload using a machine learning model, such as, e.g., a cognitive workload model or another model stored in the model database 330. Accordingly, in some configurations, the electronic processor 300 may access one or more machine learning models from the model database 330. The electronic processor 300 may then apply the one or more machine learning models to the monitoring data (as the inputs). By applying the one or more machine learning models to the monitoring data, the electronic processor 300 may determine a cognitive workload for the operator (as the output).

Alternatively, or in addition, in some configurations, the electronic processor 300 may determine the cognitive workload on an operator basis. In such configurations, the electronic processor 300 may determine an identification of the operator associated with the monitoring data. In some configurations, the monitoring data may include an identification of the operator. As one non-limiting example, the monitoring data may include an identification input (e.g., login credentials or the like) that identifies the operator. As another non-limiting example, the monitoring data may include visual media data, audible media data, or another type of data that includes a distinguishing characteristic associated with the operator. Following this example, the electronic processor 300 may perform a recognition function to determine an identification of the operator based on the distinguishing characteristic. For instance, when the monitoring data includes an image of the operator, the electronic processor 300 may use facial recognition technology or functionality to determine an identification of the operator. Alternatively, or in addition, when the monitoring data includes a voice recording of the operator, the electronic processor 300 may use voice recognition technology or functionality to determine an identification of the operator.

After determining the identity (or identification) of the operator associated with the monitoring data, the electronic processor 300 may then determine the cognitive workload based on the identification of the operator. A perceived level of mental effort or stress given a specific situation may be different for each operator. As one non-limiting example, for a first situation, a first operator may have a first cognitive workload (a higher level of stress and mental effort). In contrast, a second different operator may have a second different cognitive workload (a lesser level of stress and mental effort) for the same given situation (i.e., the first situation). As such, in some configurations, the electronic processor 300 may determine the cognitive workload based on the identification of the operator such that a baseline cognitive workload may be learned or identified (e.g., over time). By having a baseline cognitive workload for an operator, the electronic processor 300 may determine whether the operator is feeling over stressed or under stressed based on a baseline cognitive workload specifically tailored to that operator (as opposed to a standard cognitive workload baseline or threshold).

The electronic processor 300 may also determine a user interface configuration for the operator of the industrial system 105 (at block 415). A user interface configuration may refer to elements or parameters defining how a user interface is configured and provided to an operator. In some configurations, the user interface configuration includes a set of display parameters, as described in greater detail herein. In some configurations, the user interface configuration defines how a graphical user interface is to be displayed (or otherwise provided) to the operator (e.g., via the display device 280 of the industrial system 105). As one non-limiting example, in some configurations, the user interface configuration defines how a control user interface will be controlled and displayed to a specific operator during operation of the industrial system 105.

In some configurations, the electronic processor 300 may determine the user interface configuration based on the cognitive workload. Accordingly, in such configurations, the user interface configuration may be a custom user interface configuration for the operator associated with the cognitive workload, where the custom user interface configuration is specific to increasing that operator's situation awareness and, ultimately, increasing that operator's effectiveness at operating the industrial system 105 (or an industrial subsystem 150 thereof). As one non-limiting example, when the cognitive workload for the operator indicates that the operator is over stressed or exerting a high mental effort, the electronic processor 300 may determine a user interface configuration that reduces the operator's stress and mental effort (e.g., changing a color of a user interface element, increasing a font size, removing unnecessary user interface elements, etc.).

Alternatively, or in addition, in some configurations, the electronic processor 300 may determine the user interface configuration based on a predetermined industry standard (e.g., the HMI style guide 355). Accordingly, in such configurations, the electronic processor 300 may access the predetermined industry standard (e.g., the HMI style guide 355) and determine a user interface configuration such that the user interface configuration aligns with or complies a predetermined industry standard, such as, e.g., the industry standard ANSI/ISA-101.01-2015. As one non-limiting example, when the predetermined industry standard specifies a first color for a first type of alarm, the electronic processor 300 may determine the user interface configuration specifies that the first type of alarm is indicated in the first color. In some configurations, the electronic processor 300 may prioritize a predetermined industry standard user interface configuration over a user interface configuration that optimizes the operator's performance.

Alternatively, or in addition, in some configurations, the electronic processor 300 may determine the user interface configuration for the operator based on at least one object included in the object library 360. Accordingly, in such configurations, the electronic processor 300 may access the object library 360 and determine a user interface configuration such that the user interface configuration includes or otherwise implements one or more objects included in the object library 360.

Alternatively, or in addition, in some configurations, the electronic processor 300 may determine the user interface configuration based on an identification of the operator. In such configurations, the electronic processor 300 may determine an identification of the operator, as described in greater detail herein. After determining the identification of the operator, the electronic processor 300 may determine the user interface configuration based on the identification of the operator. As one non-limiting example, each operator may be associated with a user profile that indicates a set of user interface display preferences (e.g., a set of preferred display preferences). In such cases, the electronic processor 300 may determine the user interface configuration based on the set of preferred display preferences for the identified operator.

In some configurations, the electronic processor 300 may determine the user interface configuration using a machine learning model, such as, e.g., a user interface configuration model or another model stored in the model database 330. Accordingly, in some configurations, the electronic processor 300 may access one or more machine learning models from the model database 330. The electronic processor 300 may then apply the one or more machine learning models to the monitoring data, the cognitive workload, the identification of the operator, the HMI style guide 355, or a combination thereof (as the inputs). The electronic processor 300 may then determine a user interface configuration for the operator (as the output).

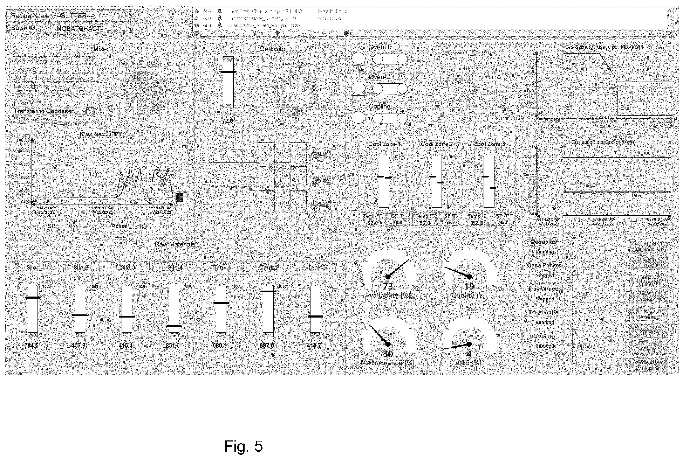

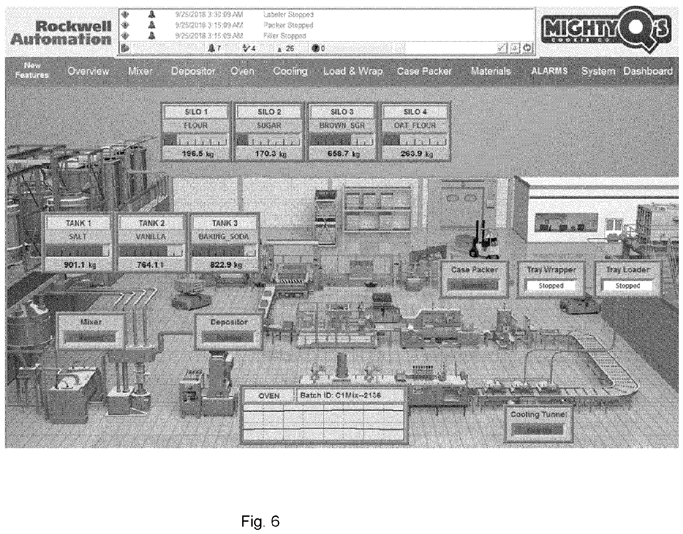

The electronic processor 300 may then transmit the user interface configuration to the industrial system 105 for display to the operator via the display device 280 of the industrial system 105 (at block 420). In some configurations, the electronic processor 300 transmits the user interface configuration as a set of raw configuration parameters or data. Alternatively, or in addition, the electronic processor 300 transmits the user interface configuration as a user interface (e.g., a graphical user interface). Accordingly, in some configurations, the electronic processor 300 generates a user interface corresponding to the user interface configuration and transmits the user interface to the industrial system 105 for display to the operator via the display device 280. In response to receiving the user interface configuration (e.g., a set of raw configuration parameters or data or a user interface), the display device 280 may display or otherwise provide the user interface configuration (as a user interface) to an operator of the industrial system 105. As non-limiting examples, FIGS. 5-6 include example edge HMI displays according to some configurations. FIG. 5 illustrates an example edge HMI display (e.g., as a graphical user interface) that may increase and maintain situation awareness for a specific operator (as opposed to the edge HMI display included in FIG. 6).

In some configurations, the method 400 is performed on streaming data (in real-time or near real-time). Accordingly, in some configurations, the electronic processor 300 may repeat one or more steps of the method 400 such that, e.g., the user interface provided to the operator of the industrial system 105 is updated or refreshed. The electronic processor 300 may update one or more elements of the user interface configuration continuously, intermittently, or a combination thereof. Alternatively, or in addition, the electronic processor 300 may update one or more elements of the user interface configuration at predetermined time intervals. As one non-limiting example, the electronic processor 300 may update a first element every five minutes and a second element every 30 seconds. Alternatively, or in addition, the electronic processor 300 may update one or more elements of the user interface configuration in response to detecting a trigger event. A trigger event may include, e.g., an alarm, an operational parameter of the industrial system 105 satisfying a threshold (e.g., a temperature of an industrial device 205 exceeding a temperature threshold), a situation awareness parameter of the operator (e.g., a blood pressure of the operator exceeding a blood pressure threshold), or the like. Accordingly, in some configurations, the electronic processor 300 may update the user interface configuration based on a current condition (e.g., a current operational state of the industrial system 105, a current cognitive workload of the operator, or the like) such that the user interface configuration reflects the current condition in real-time (or near real-time).

As such, in some instances, after transmitting the user interface configuration, the electronic processor 300 may receive additional monitoring data (or subsequent monitoring data) associated with the industrial system 105. Based at least on the additional monitoring data, the electronic processor 300 may determine a subsequent cognitive workload for the operator of the industrial system 105. The electronic processor 300 may then determine a subsequent user interface configuration for the operator of the industrial system based on, e.g., the subsequent cognitive workload, the additional monitoring data, or the like. The electronic processor 300 may enable transmission of the subsequent user interface to the industrial system 105 for display to the operator via the display device 280 of the industrial system 105.

In some configurations, the electronic processor 300 may receive feedback data from the industrial system 105. The feedback data may include a user interaction (by the operator) with the user interface configuration. In some configurations, the feedback data may include (or be included in) the additional or subsequent monitoring data. Using the feedback data, the electronic processor 300 (via the learning engine 325) may update or retrain one or more machine learning models stored in the model database 330. Accordingly, in some configurations, how an operator interacts with the user interface configuration may be used to further refine or improve future user interface configurations.

As one non-limiting example, the electronic processor 300 may determine (using a machine learning model) a first user interface configuration that includes a first color, where the first color is intended to reduce an increased physiological parameter exhibited by the operator. After the first user interface configuration is displayed to the operator, the electronic processor 300 may receive additional data (e.g., as additional monitoring data, feedback data, or the like) that the operator's physiological parameter remained the same or further increased (indicating that the first user interface configuration did not reduce the physiological parameter as intended). In response, the electronic processor 300 may determine (via retraining the machine learning model and applying the retrained machine learning model) a subsequent user interface configuration that includes a second different color, where the second different color is intended to reduce the increased physiological parameter exhibited by the operator.

What has been described above includes examples of the disclosed technology. It is, of course, not possible to describe every conceivable combination of components or methodologies for purposes of describing the disclosed technology, but one of ordinary skill in the art may recognize that many further combinations and permutations of the disclosed technology are possible. Accordingly, the disclosed technology is intended to embrace all such alterations, modifications, and variations that fall within the spirit and scope of the appended claims.

In particular and in regard to the various functions performed by the above described components, devices, circuits, systems and the like, the terms (including a reference to a "means") used to describe such components are intended to correspond, unless otherwise indicated, to any component which performs the specified function of the described component (e.g., a functional equivalent), even though not structurally equivalent to the disclosed structure, which performs the function in the herein illustrated exemplary aspects of the disclosed technology. In this regard, it will also be recognized that the disclosed technology includes a system as well as a computer-readable medium having computer-executable instructions for performing the acts and/or events of the various methods of the disclosed technology.

In addition, while a particular feature of the disclosed technology may have been disclosed with respect to only one of several implementations, such feature may be combined with one or more other features of the other implementations as may be desired and advantageous for any given or particular application. Furthermore, to the extent that the terms "includes," and "including" and variants thereof are used in either the detailed description or the claims, these terms are intended to be inclusive in a manner similar to the term "comprising."

## Claims

1. A system for providing situation aware display generation, the system comprising:
an electronic processor configured to:
receive, from at least one sensor, monitoring data associated with an industrial system;
determine, based on the monitoring data, a cognitive workload for an operator of the industrial system;
determine, based on the cognitive workload, a user interface configuration for the operator of the industrial system; and
transmit the user interface configuration to the industrial system for display to the operator via a display device of the industrial system.

2. The system of claim 1, at least one of:
wherein the electronic processor is configured to receive the monitoring data during operation of the industrial system by the operator;
wherein the monitoring data includes physiological data associated with the operator, wherein the physiological data includes eye tracking data; and
wherein the monitoring data includes operator response data associated with an abnormal operating condition of the industrial system.

3. The system of claim 1 or 2, wherein the electronic processor is further configured to:
perform, based on the monitoring data, a task analysis,
wherein the electronic processor is configured to determine the cognitive workload based on the task analysis.

4. The system of one of claims 1 to 3, wherein the electronic processor is further configured to:
determine an identification of the operator,
wherein the user interface configuration is determined based on the identification of the operator.

5. The system of one of claims 1 to 4, at least one of:
wherein the electronic processor is configured to determine the user interface configuration for the operator based on a human-machine interface ("HMI") style guide, the HMI style guide is a predetermined industry standard for configuring user interfaces; and
wherein the electronic processor is configured to determine the user interface configuration for the operator based on at least one object included in an object library.

6. The system of one of claims 1 to 5, wherein the electronic processor is further configured to:
after transmission of the user interface configuration,
receive additional monitoring data associated with the industrial system,
determine, based on the additional monitoring data, a subsequent cognitive workload for the operator of the industrial system,
determine, based on the subsequent cognitive workload, a subsequent user interface configuration for the operator of the industrial system, and
enable transmission of the subsequent user interface configuration to the industrial system for display to the operator via the display device of the industrial system.

7. The system of one of claims 1 to 6, wherein the electronic processor is configured to determine the cognitive workload by applying a machine learning model to the monitoring data.

8. The system of claim 7, wherein the electronic processor is further configured to:
receive, from the industrial system, feedback data associated with the user interface configuration, wherein the feedback data includes a user interaction with the user interface configuration, and
update the machine learning model based on the feedback data.

9. A method for providing situation aware display generation, the method comprising:
receiving, with an electronic processor, from at least one sensor, monitoring data associated with an industrial system;
determining, based on the monitoring data, with the electronic processor, a cognitive workload for an operator of the industrial system;
determining, with the electronic processor, a user interface configuration for the operator based on the cognitive workload and a predetermined industry standard; and
transmitting, with the electronic processor, the user interface configuration to the industrial system for display to the operator via a display device of the industrial system.

10. The method of claim 9, at least one of:
wherein receiving the monitoring data includes receiving the monitoring data as a continuous data stream; and
wherein receiving the monitoring data includes receiving operational data associated with the industrial system.

11. The method of claim 9 or 10, further comprising:
applying a machine learning model to the monitoring data to determine the cognitive workload of the operator;
receiving, from the industrial system, feedback data associated with the user interface configuration, wherein the feedback data includes a user interaction with the user interface configuration; and
updating the machine learning model based on the feedback data.

12. A non-transitory computer-readable medium storing instructions that, when executed by an electronic processor, perform a set of functions, the set of functions comprising:
receiving, from at least one sensor, monitoring data associated with an industrial system;
determining, based on the monitoring data, a cognitive workload for an operator of the industrial system;
determining, based on the cognitive workload, a custom user interface configuration for the operator of the industrial system, wherein the custom user interface configuration complies with a predetermined industry standard;
generating a graphical user interface based on the custom user interface configuration; and
providing the graphical user interface to the industrial system for display to the operator via a display device of the industrial system.

13. The computer-readable medium of claim 12, wherein the set of functions further comprises:
after transmission of the custom user interface configuration,
receiving additional monitoring data associated with the industrial system,
determining, based on the additional monitoring data, a subsequent cognitive workload for the operator of the industrial system,
comparing the cognitive workload and the subsequent cognitive workload,
determining, based on the comparison of the cognitive workload and the subsequent cognitive workload, a subsequent user interface configuration for the operator of the industrial system, and
enabling transmission of the subsequent user interface configuration to the industrial system for display to the operator via the display device of the industrial system.

14. The computer-readable medium of claim 12 or 13, wherein the set of functions further comprises:
applying a machine learning model to the monitoring data to determine the cognitive workload of the operator;
receiving, from the industrial system, feedback data associated with the custom user interface configuration, wherein the feedback data includes a user interaction with the custom user interface configuration; and
updating the machine learning model based on the feedback data.

15. The computer-readable medium of one of claims 12 to 14, at least one of:
wherein receiving the monitoring data includes receiving physiological data associated with the operator, wherein the physiological data includes eye tracking data; and
wherein receiving the monitoring data includes receiving operator response data associated with an abnormal operating condition of the industrial system.
